# EUROPÄISCHE PATENTSCHRIFT

(11) **EP 0 401 785 B1**
(45) Veröffentlichungstag und Bekanntmachung des Hinweises auf die Patenterteilung: **28.04.1993**
(21) Anmeldenummer: 90110697.1
(22) Anmeldetag: 06.06.1990
(51) Int. Cl.: F16D 65/02

(54) **Teilbelag-Scheibenbremse mit Niederhaltefeder**
Caliper-type disc brake with holding-down spring
Frein à disques à garniture partielle avec ressort à presse-tôle

(30) Priorität: 07.06.1989 DE 8906980 U
(43) Veröffentlichungstag der Anmeldung: 12.12.1990
(73) Patentinhaber: LUCAS INDUSTRIES public limited company, Birmingham, B19 2XF West Midlands (GB)
(72) Erfinder: Madzgalla, Hans Georg, D-5400 Koblenz (DE); Madzgalla, Frank, D-5400 Koblenz (DE)
(74) Vertreter: Goetz, Rupert, Dipl.-Ing.

(56) Entgegenhaltungen:
- DE-B- 2 212 464
- DE-C- 2 842 790
- US-A- 4 408 681

## Beschreibung

Die Erfindung betrifft eine Teilbelag-Scheibenbremse mit
- einem Paar Bremsbacken, die an je eine Seite einer Bremsscheibe andrückbar sind,
- einem Sattel, der die beiden Bremsbacken und die Bremsscheibe übergreift, und
- einer Niederhaltefeder aus Blech, die mit einem an ihr ausgebildeten Abstützbereich nahe einer der Bremsbacken am Sattel abgestützt ist, sich von dort frei auskragend über die Bremsscheibe hinwegerstreckt und Federschenkel aufweist, die auf je eine der Bremsbacken drücken.

Eine Teilbelag-Scheibenbremse dieser Gattung ist aus der DE-C-2842790 bekannt. Dort ist der Sattel ein sogenannter Schwimmsattel, der parallel zur Achse der Bremsscheibe verschiebbar ist. Der in bezug auf das zugehörige Fahrzeug axial innere Teil des Sattels ist als Zylinder ausgebildet und enthält einen Betätigungskolben, mit dem eine der Bremsbacken direkt betätigbar ist. An dem entgegengesetzten Ende des Sattels sind Arme ausgebildet, an denen die andere Bremsbacke abgestützt ist. Radial außerhalb dieser Arme ist am Sattel ein achsparalleler Bolzen befestigt, an dem ein radialer Befestigungschenkel einer Niederhalte feder mit einer schlüssellochartigen Ausstanzung eingehängt ist. In einer Ausführungsform hat die Niederhaltefeder drei Federschenkel, die sich achsparallel nebeneinander vom Befestigungsschenkel weg erstrecken. Der mittlere Federschenkel ragt über die Bremsscheibe hinweg, ist haarnadelartig umgebogen und drückt auf die direkt betätigbare Bremsbacke. Die beiden anderen Federschenkel sind kürzer, ebenfalls haarnadelartig umgebogen und drücken beide auf die andere Bremsbacke. Bei dieser Ausführungsform mit drei nebeneinander angeordneten Federschenkeln ist eine verhältnismäßig breite Aussparung im Sattel erforderlich, um die Federschenkel aufzunehmen. Der Sattel, der dadurch örtlich geschwächt wird, muß in benachbarten Bereichen entsprechend verstärkt werden und erfordert entsprechend viel Bauraum zwischen dem äußeren Rand der Bremsscheibe und der Felge des zugehörigen Rades.

Bei einer anderen Ausführungsform besteht die Niederhaltefeder aus zwei ineinanderliegenden Stanzteilen, von denen das äußere einen auf die direkt betätigbare Bremsbacke drückenden Federschenkel aufweist, während ein auf die andere Bremsbacke drückender Federschenkel an dem inneren Stanzteil ausgebildet ist. Diese Niederhaltefeder läßt sich in einer verhältnismäßig schmalen Aussparung des Sattels unterbringen, erfordert aber für ihre Herstellung aus zwei Stanzteilen einen entsprechend höheren Aufwand.

Der Erfindung liegt die Aufgabe zugrunde, eine Teilbelag-Scheibenbremse mit einer Niederhaltefeder zu schaffen, die wenig Bauraum erfordert und mit geringem Aufwand herstellbar ist.

Die Aufgabe ist erfindungsgemäß ausgehend von einer Teilbelag-Scheibenbremse der eingangs beschriebenen Gattung dadurch gelöst, daß
- die Niederhaltefeder mindestens zwei Federschenkel hat, die sich, durch einen ersten axialen Schlitz voneinander getrennt und im entspannten Zustand mindestens annähernd in einer gemeinsamen Ebene liegend, über die Bremsscheibe hinwegerstrecken,
- mindestens ein erster von diesen Federschenkeln gegen die vom Abstützbereich entfernte Bremsbacke drückt,
- mindestens ein zweiter von diesen Federschenkeln durch einen zweiten axialen Schlitz von einem dritten Federschenkel derart getrennt ist, daß der zweite und der dritte Federschenkel nur an ihren vom Abstützbereich entfernten Enden zusammenhängen, ohne umgebogen zu sein, und
- der dritte Federschenkel mit seinem anderen Ende auf die dem Abstützbereich benachbarte Bremsbacke drückt.

Dadurch, daß sämtliche Schenkel der vom Abstützbereich frei auskragenden Niederhaltefeder sich über die Bremsscheibe hinweg erstrecken, hat jeder der Federschenkel eine verhältnismäßig flach ansteigende Kennlinie. Dies ist vor allem für das Zusammenwirken mit Bremsbacken von Bedeutung, die während ihrer Lebensdauer infolge Belagverschleiß ihre Stellung in bezug auf den Sattel ändern. Dies gilt für beide Bremsbacken, wenn es sich um eine Bremse mit Festsattel handelt; bei einer Bremse mit Schwimmsattel ändert hingegen nur die direkt betätigte Bremsbacke infolge Belagverschleiß ihre Lage in bezug zum Sattel.

Bei einer Bremse mit Schwimmsattel wird deshalb die Niederhaltefeder vorzugsweise so angeordnet, daß der dritte Federschenkel, dessen Elastizität sich zu derjenigen des zweiten Federschenkels addiert, auf die direkt betätigbare Bremsbacke drückt. In jedem Fall läßt sich an den Federschenkeln der erfindungsgemäßen Niederhaltefeder jegliche haarnadelförmige Biegung vermeiden, so daß der Platzbedarf der Federschenkel in radialer Richtung der Bremse äußert gering ist.

Vorteilhafte Weiterbildungen der Erfindung ergeben sich aus den Unteransprüchen.

Ein Ausführungsbeispiel mit weiteren Einzelheiten der Erfindung wird im folgenden anhand schematischer Zeichnungen erläutert. Es zeigen:
- Fig. 1: einen axialen Schnitt durch einen radial äußeren Bereich einer Teilbelag-Scheibenbremse mit erfindungsgemäßer Niederhaltefeder und Bremsbacken mit neuen Bremsbelägen,
- Fig. 2: einen entsprechenden axialen Schnitt bei abgenutzten Bremsbelägen,
- Fig. 3: die Niederhaltefeder in Draufsicht,
- Fig. 4: die Ansicht IV in Fig. 3,
- Fig. 5: die Ansicht V in Fig. 3,

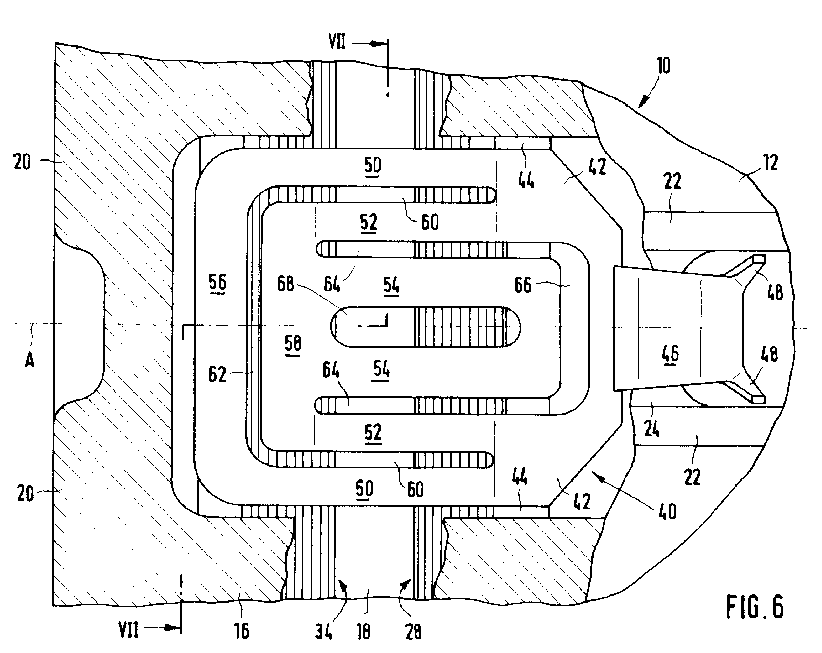

- Fig. 6: die Ansicht VI in Fig. 1 und

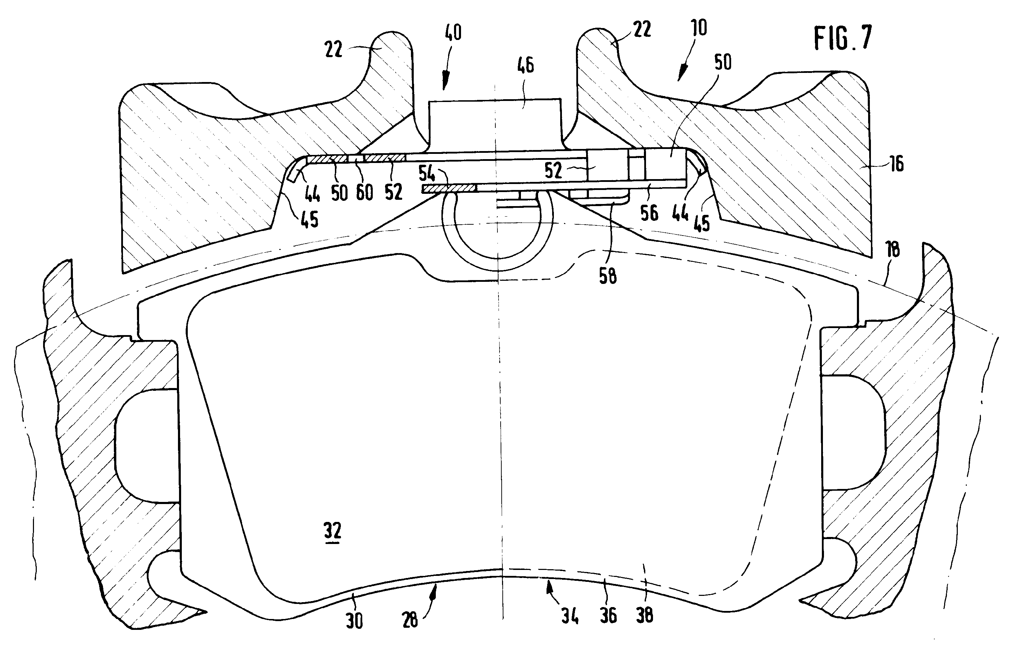

- Fig. 7: den Schnitt VII-VII in Fig. 6.

Die dargestellte Teilbelag-Scheibenbremse hat einen Sattel 10, der als Schwimmsattel ausgebildet, also an einem nicht dargestellten Bremsträger in üblicher Weise axial verschiebbar geführt ist. Der Sattel 10 ist einstückig mit einem hydraulischen Zylinder 12 ausgeführt, der einen Kolben 14 enthält. Vom Zylinder 12 erstreckt sich ein Brückenteil 16 des Sattels 10 über eine Bremsscheibe 18 hinweg; an der vom Zylinder 12 abgewandten Seite des Sattels 10 sind zwei Arme 20 ausgebildet, die dem Kolben 14 axial gegenüberstehen. Die axiale Richtung, in welcher der Sattel 10 verschiebbar ist, stimmt mit der Achse A des Zylinders 12 überein.

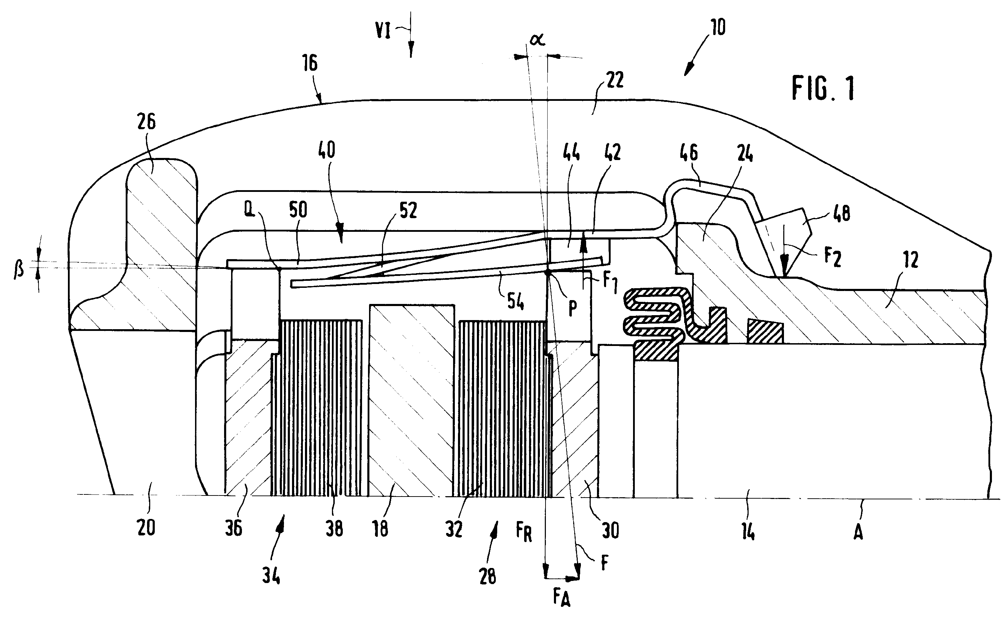

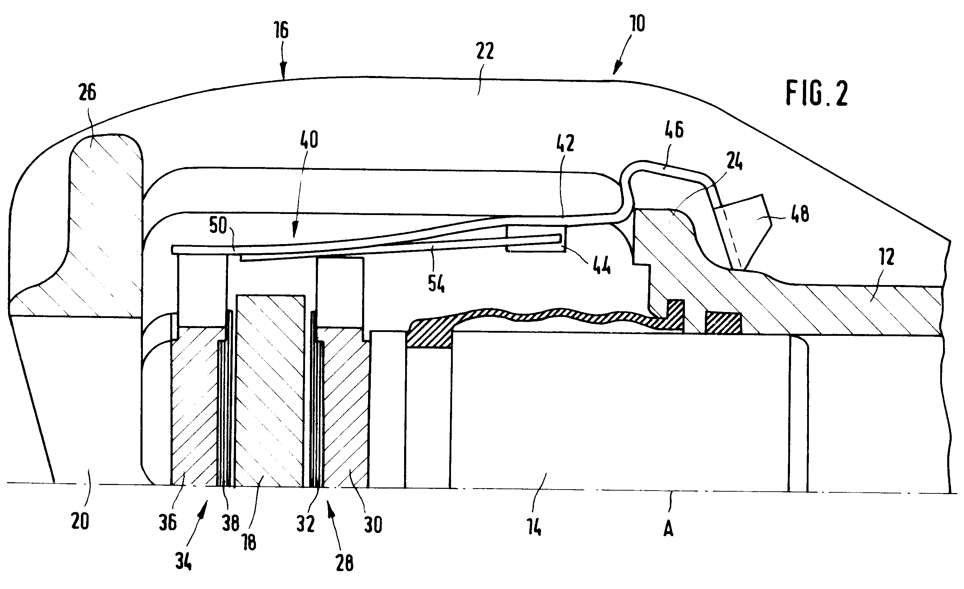

Das Brückenteil 16 des Sattels 10 hat zwei achsparallele Längsrippen 22, von denen in Fig. 1 und 2 nur eine sichtbar ist. Die beiden Längsrippen 22 lassen zwischen sich radial außerhalb der Bremsscheibe 18 eine achsparallele Aussparung frei, sind auf der in bezug auf das zugehörige Fahrzeug inneren Seite des Sattels 10 durch den Zylinder 12 sowie einen querliegenden Vorsprung 24 miteinander verbunden und enden auf der fahrzeugäußeren Seite des Sattels 10 in einem Joch 26, von dem sich die beiden Arme 20 radial nach innen erstrecken.

Zwischen der Bremsscheibe 18 und dem Kolben 14 ist eine unmittelbar von diesem betätigbare Bremsbacke 28 angeordnet, die eine am Kolben 14 anliegende Stützplatte 30 sowie einen Bremsbelag 32 aufweist. Zwischen der Bremsscheibe 18 und den Armen 20 ist eine durch axiales Verschieben des Sattels 10 betätigbare Bremsbacke 34 angeordnet, die eine an den Armen 20 anliegende Stützplatte 36 sowie einen Bremsbelag 38 aufweist.

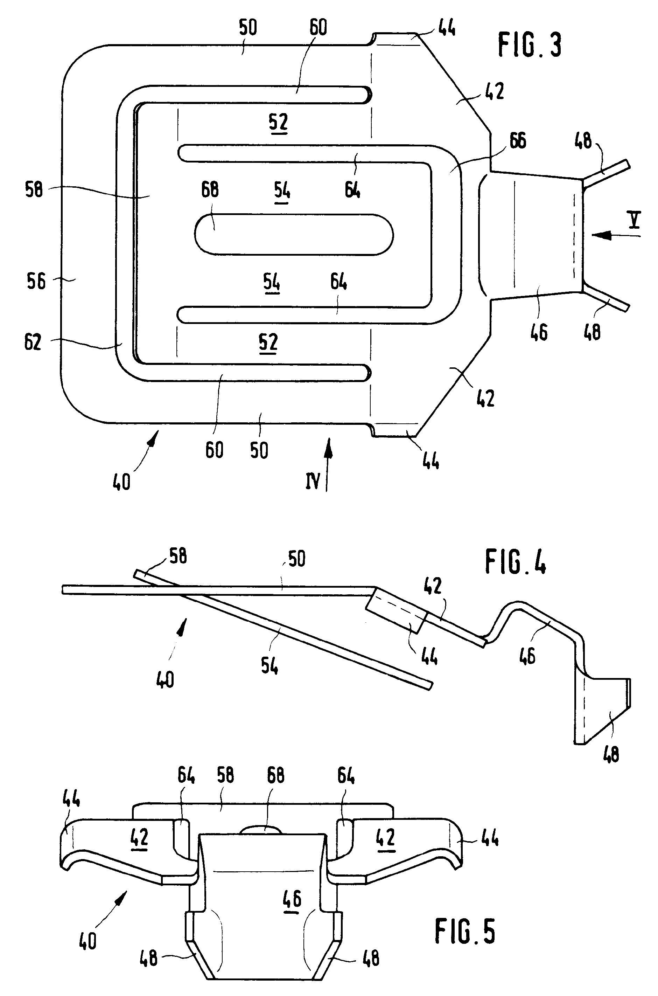

Zum Niederhalten der beiden Bremsbacken 28 und 34 ist zwischen dem Sattel 10 und den Stützplatten 30 und 36 eine Niederhaltefeder 40 eingespannt, die in Fig. 3 bis 5 in entspanntem Zustand gesondert dargestellt ist. Die Niederhaltefeder 40 hat einen ebenen Abstützbereich 42, der an seinen beiden achsparallelen Rändern durch je einen nach unten abgebogenen Flügel 44 begrenzt ist. Mit dem Abstützbereich 42 einschließlich der beiden Flügel 44 greift die Niederhaltefeder 40 derart unter die beiden Längsrippen 22, daß sie radial nach außen gerichtete Kräfte im Abstützbereich 42 auf den Sattel 10 überträgt. Die beiden Flügel 44 sind an je einer zur Achse A der Bremsscheibe 18 parallelen Schulter 45 des Sattels 10 geführt.

An den Abstützbereich 42 anschließend ist an der Niederhaltefeder 40 ein hakenartiger Fortsatz 46 ausgebildet, der über den querliegenden Vorsprung 24 des Sattels 10 hinweggreift und mit seinem Ende gegen die Außenwand des Zylinders 12 drückt. Am Endbereich des Fortsatzes 46 ist ein Paar Laschen 48 ausgebildet, die zwischen die Längsrippen 22 eingreifen.

Durch diese Abstützungen ist die Niederhaltefeder 40 daran gehindert, sich in der Zeichnungsebene der Fig. 1 und 2 im Uhrzeigersinn zu drehen; außerdem ist jegliche Drehung der Niederhaltefeder 40 um eine in der Zeichnungsebene der Fig. 1 und 2 normal zur Achse A verlaufende Achse verhindert.

Ausgehend vom Abstützbereich 42 erstrecken sich ein Paar äußere Federschenkel 50 sowie ein Paar mittlere Federschenkel 52 über die Bremsscheibe 18 hinweg. Im entspannten Zustand der Niederhaltefeder 40 liegen die äußeren und mittleren Federschenkel 50, 52 in einer gemeinsamen Ebene, die mit der Ebene des Abstützbereichs 42 einen stumpfen Winkel einschließt. An die vom Abstützbereich 42 entfernten Enden der mittleren Federschenkel 52 schließt sich ohne haarnadelförmige Biegung ein innerer Federschenkel 54 an, der sich unter einem spitzen Winkel in Richtung zum Abstützbereich 42 zurückerstreckt.

Die vom Abstützbereich 42 entfernten Enden der beiden äußeren Federschenkel 50 sind durch einen in deren Ebene liegenden äußeren Steg 56 miteinander verbunden. In entsprechender Weise sind die vom Abstützbereich 42 entfernten Enden der mittleren Federschenkel 52 durch einen mittleren Steg 58 miteinander verbunden; dieser liegt im dargestellten Beispiel in derselben Ebene wie der innere Federschenkel 54, schließt also mit der Ebene der mittleren Federschenkel 52 einen spitzen Winkel ein, wie vor allem aus Fig. 4 ersichtlich ist.

Jeder der beiden äußeren Federschenkel 50 ist vom benachbarten mittleren Federschenkel 52 durch einen axialen Schlitz 60 getrennt. Die beiden Querstege 56 und 58 sind voneinander durch einen Querschlitz 62 getrennt, der zusammen mit den axialen Schlitzen 60 eine U-förmige Schlitzanordnung bildet. In entsprechender Weise ist der innere Federschenkel 54 von den beiden mittleren Federschenkeln 52 durch je einen axialen Schlitz 64 getrennt und ist ferner vom Abstützbereich 42 durch einen Querschlitz 66 getrennt. Die Schlitze 64 und 66 bilden eine weitere U-förmige Schlitzanordnung, die in bezug auf die Schlitzanordnung 60, 62 umgekehrt und in diese eingreifend angeordnet ist. Schließlich ist im mittleren Federschenkel 54 ein axialer Schlitz 68 ausgebildet, der im dargestellten Beispiel die querliegenden Schlitze 62 und 66 beide nicht erreicht. Der axiale Schlitz 68 ist merklich breiter als die übrigen Schlitze und dient vor allem dazu, den Abnutzungszustand der Bremsbeläge 32 und 38 zu beobachten.

Im neuen Zustand der Bremsbeläge 32 und 38 nehmen die Federschenkel 50, 52 und 54 der Niederhaltefeder 40 die aus Fig. 1 ersichtliche Stellung ein. Dabei drücken die vom Abstützbereich 42 entfernten Enden der äußeren Federschenkel 50 gegen den radial äußeren Rand der Stützplatte 36 der Bremsbacke 34; die freien Enden des inneren Federschenkels 54 drücken gegen den radial äußeren Rand der Stützplatte 30 der Bremsbacke 28. Der innere Federschenkel 54 übt auf die Bremsbacke 28 eine Niederhaltekraft F aus, die gemäß Fig. 1 eine radiale Komponente F_{R} und eine achsparallel zum Kolben 14 hin gerichtete Komponente F_{A} aufweist. Die achsparallele Komponete F_{A} ergibt sich daraus, daß die Flächennormale des inneren Schenkels 54 in dessen Berührungspunkt P mit der äußeren Kante der Stützplatte 30 gegen die Ebene dieser Stützplatte 30 (und der Bremsscheibe 18) um einen Winkel α geneigt ist. Die Kraftkomponente F_{A} ist ständig bestrebt, die Bremsbacke 28 von der Bremsscheibe 18 weg zu verschieben.

In entsprechender Weise schließt die Flächennormale der äußeren Federschenkel 50 in deren Berührungspunkt Q mit der Ebene der Stützplatte 36 einen Winkel β ein, so daß die von den äußeren Federschenkeln 50 ausgeübte Niederhaltekraft eine axiale Komponente hat, die bestrebt ist, die Stützplatte 36 ständig an den Armen 20 anliegend zu halten.

Den von der Niederhaltefeder 40 auf die Bremsbacken 28 und 34 ausgeübten Kräften entsprechen Kräfte F₁ und F₂, mit denen die Niederhaltefeder 40 auf den Sattel 10 einwirkt. Die Kraft F₁ ist radial nach außen gerichtet und wird vom Abstützbereich 42 auf radial innere Wandbereich der Längsrippen 22 ausgeübt; die Kraft F₂ ist radial nach innen gerichtet und wird vom freien Ende des hakenartigen Fortsatzes 46 der Niederhaltefeder 40 auf die Außenwand des Zylinders 12 ausgeübt.

## Patentansprüche

1. Teilbelag-Scheibenbremse mit
- einem Paar Bremsbacken (28, 34), die an je eine Seite einer Bremsscheibe (18) andrückbar sind,
- einem Sattel (10), der die beiden Bremsbacken (28, 34) und die Bremsscheibe (18) übergreift, und
- einer Niederhaltefeder (40) aus Blech, die mit einem an ihr ausgebildeten Abstützbereich (42) nahe einer der Bremsbacken (28) am Sattel (10) abgestützt ist, sich von dort frei auskragend über die Bremsscheibe (18) hinwegerstreckt und Federschenkel (50, 54) aufweist, die auf je eine der Bremsbacken (34, 28) drücken,
dadurch **gekennzeichnet,** daß
- die Niederhaltefeder (40) mindestens zwei Federschenkel (50, 52) hat, die sich, durch einen ersten axialen Schlitz (60) voneinander getrennt und im entspannten Zustand mindestens annähernd in einer gemeinsamen Ebene liegend, über die Bremsscheibe (18) hinwegerstrecken,
- mindestens ein erster von diesen Federschenkeln (50) gegen die vom Abstützbereich (42) entfernte Bremsbacke (34) drückt,
- mindestens ein zweiter von diesen Federschenkeln (52) durch einen zweiten axialen Schlitz (64) von einem dritten Federschenkel (54) derart getrennt ist, daß der zweite und der dritte Federschenkel (52, 54) nur an ihren vom Abstützbereich (42) entfernten Enden zusammenhängen, ohne umgebogen zu sein, und
- der dritte Federschenkel (54) mit seinem anderen Ende auf die dem Abstützbereich (42) benachbarte Bremsbacke (28) drückt.

2. Teilbelag-Scheibenbremse nach Anspruch 1,
dadurch **gekennzeichnet,** daß der erste, zweite und dritte Federschenkel (50, 52, 54) der eingebauten Niederhaltefeder (40) in einem axialen Schnitt durch die Bremse Z-ähnlich aneinander anschließen.

3. Teilbelag-Scheibenbremse nach Anspruch 1 oder 2,
dadurch **gekennzeichnet,** daß ein Paar erster Federschenkel (50) durch eine U-förmige erste Schlitzanordnung (60, 62) von einem Paar zweiter Federschenkel (52) getrennt ist, und daß der dritte Federschenkel (54) durch eine umgekehrt U-förmige zweite Schlitzanordnung (64, 66) von dem Paar zweiter Federschenkel (52) und vom Abstützbereich (42) getrennt ist.

4. Teilbelag-Scheibenbremse nach einem der Ansprüche 1 bis 3,
dadurch **gekennzeichnet,** daß der dritte Federschenkel (54) einen axialen Schlitz (68) zur Beobachtung des Abnutzungszustandes von Bremsbelägen (32, 38) der Bremsbacken (28, 34) aufweist.

5. Teilbelag-Scheibenbremse nach einem der Ansprüche 1 bis 4,
dadurch **gekennzeichnet,** daß der Abstützbereich (42) der eingebauten Niederhaltefeder (40) in einer zur Achse (A) der Bremsscheibe (18) parallelen Ebene angeordnet und zur Übertragung radial nach außen gerichteter Kräfte (F₁) von der Niederhaltefeder (40) auf den Sattel (10) ausgebildet ist, und daß ein hakenartiger Fortsatz (46) der Niederhaltefeder (40) über einen äußeren Vorsprung (24) des Sattels (10) hinweggreift und zur Übertragung von radial nach innen gerichteten Kräften (F₂) auf den Sattel (10) ausgebildet ist.

6. Teilbelag-Scheibenbremse nach einem der Ansprüche 1 bis 5,
dadurch **gekennzeichnet,** daß der Abstützbereich (42) der Niederhaltefeder (40) ein Paar seitliche Flügel (44) aufweist, die an je einer zur Achse (A) der Bremsscheibe (18) parallelen Schulter (45) des Sattels (10) geführt sind.

7. Teilbelag-Scheibenbremse nach Anspruch 6,
dadurch **gekennzeichnet,** daß der hakenförmige Fortsatz (46) ein Paar seitliche Laschen (48) aufweist, die sich an je einer Längsrippe (22) des Sattels (10) abstützen.

8. Teilbelag-Scheibenbremse nach einem der Ansprüche 1 bis 7,
dadurch **gekennzeichnet,** daß die ersten und dritten Schenkel (50, 54) der eingebauten Niederhaltefeder (40) zumindest in den Bereichen, in denen sie auf je eine der Bremsbacken (34, 28) drücken, derart geneigt sind, daß die von ihnen ausgeübten Niederhaltekräfte (F) von der Bremsscheibe (18) weg gerichtete Komponenten (F_{A}) haben.

9. Teilbelag-Scheibenbremse nach einem der Ansprüche 1 bis 8, deren Sattel (10) ein Schwimmsattel ist, der Reaktionskräfte einer direkt betätigbaren Bremsbacke (28) auf die andere, durch Verschieben des Sattels (10) betätigbare Bremsbacke (34) überträgt,
dadurch **gekennzeichnet,** daß die Niederhaltefeder (40) mit ihrem Abstützbereich (42) nahe der direkt betätigbaren Bremsbacke (28) am Sattel (10) abgestützt ist und mit ihrem dritten Federschenkel (54) auf diese Bremsbacke (28) drückt.

## Claims

1. Spot-type disc brake comprising
- a pair of brake pads (28, 34) which are adapted to be pressed against either side of a brake disc (18),
- a caliper (10) which engages over the two brake pads (28, 34) and the brake disc (18), and
- a hold-down spring (40) of sheet metal which is supported with a support region (42) formed thereon near one of the brake pads (28) on the caliper (10), extends from there in cantilever manner beyond the brake disc (18) and comprises spring legs (50, 54) pressing in each case on one of the brake pads (34, 28),
characterized in that
- the hold-down spring (40) comprises at least two spring legs (50, 52) which are separated from each other by a first axial slot (60) and in the relaxed state lie at least approximately in a common plane and extend beyond the brake disc (18),
- at least a first of said spring legs (50) presses against the brake pad (34) remote from the support region (42),
- at least a second of said spring legs (52) is separated by a second axial slot (64) from a third spring leg (54) in such a manner that the second and the third spring legs (52, 54) are joined only at their ends remote from the support region (42) without being bent and
- the third spring leg (54) presses with its other end against the brake pad (28) adjacent the support region (42).

2. Spot-type disc brake according to claim 1,
characterized in that the first, second and third spring legs (50, 52, 54) of the installed hold-down spring (40) adjoin each other in Z-like manner in an axial section through the brake.

3. Spot-type disc brake according to claim 1 or 2,
characterized in that a pair of first spring legs (50) is separated by a U-shaped first slot arrangement (60, 62) from a pair of second spring legs (52) and that the third spring leg (54) is separated by an inverted U-shaped second slot arrangement (64, 66) from the pair of second spring legs (52) and from the support region (42).

4. Spot-type disc brake according to any one of claims 1 to 3,
characterized in that the third spring leg (54) comprises an axial slot (68) for observing the wear state of brake linings (32, 38) of the brake pads (28, 34).

5. Spot-type disc brake according to any one of claims 1 to 4,
characterized in that the support region (42) of the installed hold-down spring (40) is arranged in a plane parallel to the axis (A) of the brake disc (18) and is configured for transmitting radially outwardly directed forces (F₁) from the hold-down spring (40) to the caliper (10), and that a hook-like extension (46) of the hold-down spring (40) engages over an outer projection (24) of the caliper (10) and is configured for transmitting radially inwardly directed forces (F₂) to the caliper (10).

6. Spot-type disc brake according to any one of claims 1 to 5,
characterized in that the support region (42) of the hold-down spring (40) comprises a pair of lateral wings (44) which are each guided on shoulders(45) of the caliper (10) parallel to the axis (A) of the brake disc (18).

7. Spot-type disc brake according to claim 6,
characterized in that the hook-like extension (46) comprises a pair of lateral tabs (48) which each bear on a longitudinal rib (22) of the caliper (10).

8. Spot-type disc brake according to any one of claims 1 to 7,
characterized in that the first and third legs (50, 54) of the installed hold-down spring (40), at least in the regions in which they each press on one of the brake pads (34, 28), are inclined in such a manner that the hold-down forces (F) exerted by them have a component (F_{A}) directed away from the brake disc (18).

9. Spot-type disc brake according to any one of claims 1 to 8, the caliper (10) of which is a sliding caliper which transmits reaction forces of a directly actuable brake pad (28) to the other brake pad (34) actuable by shifting of the caliper (10),
characterized in that the hold-down spring (40) is supported with its support region (42) near the directly actuable brake pad (28) on the caliper (10) and presses with its third spring leg (54) onto said brake pad (28).

## Revendications

1. Frein à disques à garnitures partielles comportant
- une paire de mâchoires de frein (28, 34) qui peuvent être pressées chacune contre un côté d'un disque de frein (18),
- un étrier (10) qui passe sur les deux mâchoires (28, 34) et sur le disque (18) et
- un ressort presseur (40) en tôle qui prend appui, par une zone d'appui (42) formée sur celui-ci, à proximité de l'une des mâchoires (28), s'étend à partir de là, en porte-à-faux, sur le disque (18) et comporte des branches de ressort (50, 54) qui pressent chacune sur l'une des mâchoires (34, 28),
caractérisé en ce que
- le ressort presseur (40) présente au moins deux branches (50, 52) qui sont séparées l'une de l'autre par une première fente axiale (60) et qui, à l'état détendu, s'étendent sur le disque (18), au moins approximativement dans un plan commun,
- l'une au moins de ces branches de ressort (50) presse contre la mâchoire (34) éloignée de la zone d'appui (42),
- au moins une deuxième de ces branches de ressort (52) est séparée, par une deuxième fente axiale (64), d'une troisième branche de ressort (54), de manière que la deuxième et la troisième branche de ressort (52, 54) soient accrochées l'une à l'autre uniquement à leurs extrémités éloignées de la zone d'appui (42), sans être repliées et
- la troisième branche de ressort (54) presse, par son autre extrémité, sur la mâchoire (28) proche de la zone d'appui (42).

2. Frein à disques à garnitures partielles selon la revendication 1, caractérisé en ce que la première, la deuxième et la troisième branches de ressort (50, 52, 54) du ressort presseur (40) monté se raccordent l'une à l'autre, en Z, dans une fente axiale pratiquée dans le frein.

3. Frein à disques à garnitures partielles selon la revendication 1 ou 2, caractérisé en ce qu'une paire de premières branches de ressort (50) est séparée, par un premier ensemble de fentes (60, 62) en U, d'une paire de deuxièmes branches de ressort (52) et en ce que la troisième branche de ressort (54) est séparée, par un deuxième ensemble de fentes (64, 66) en U inversé, de la paire de deuxièmes branches de ressort (52) et de la zone d'appui (42).

4. Frein à disques à garnitures partielles selon l'une des revendications 1 à 3, caractérisé en ce que la troisième branche de ressort (54) présente une fente axiale (68) destinée à observer l'état d'usure des garnitures de frein (32, 38) des mâchoires (28, 34).

5. Frein à disques à garnitures partielles selon l'une des revendications 1 à 4, caractérisé en ce que la zone d'appui (42) du ressort presseur (40) monté se trouve dans un plan parallèle à l'axe (A) du disque de frein (18) et est conçue, pour transmettre des forces (F₁), dirigées radialement vers l'extérieur, du ressort presseur (40) à l'étrier (10), et en ce qu'un prolongement (46) en crochet du ressort presseur (40) passe sur une saillie (24) extérieure de l'étrier (10) et est conçue pour transmettre à l'étrier (10) des forces (F₂) dirigées radialement vers l'extérieur.

6. Frein à disques à garnitures partielles selon l'une des revendications 1 à 5, caractérisé en ce que la zone d'appui (42) du ressort presseur (40) comporte une paire d'ailes (44) latérales qui passent chacune contre un épaulement (45) de l'étrier (10), parallèle à l'axe (A) du disque de frein (18).

7. Frein à disques à garnitures partielles selon la revendication 6, caractérisé en ce que le prolongement (46) en forme de crochet présente une paire de pattes (48) latérales qui prennent appui chacune contre une nervure longitudinale (22) de l'étrier (10).

8. Frein à disques à garnitures partielles selon l'une des revendications 1 à 7, caractérisé en ce que les premières et les troisièmes branches (50, 54) du ressort presseur (40) monté sont inclinées, au moins dans les zones dans lesquelles elles pressent chacune sur l'une des mâchoires de frein (34, 28), de manière que les forces de pression (F), exercées par elles aient des composantes (F_{A}) s'éloignant du disque de frein (18).

9. Frein à disques à garnitures partielles selon l'une des revendications 1 à 8 dont l'étrier (10) est un étrier flottant qui transmet les forces de réaction d'une mâchoire de frein (28), à actionnement direct, à l'autre mâchoire de frein (34) actionnée par déplacement de l'étrier (10), caractérisé en ce que le ressort presseur (40) prend appui contre l'étrier (10), par sa zone d'appui (42) proche de la mâchoire de frein (28) à actionnement direct et presse sur cette mâchoire de frein (28), par sa troisième branche de ressort (54).
